Europäisches Patentamt

European Patent Office

Office européen des brevets

(19)

(11) Veröffentlichungsnummer: **0 117 251**

A2

(12) # EUROPÄISCHE PATENTANMELDUNG

(21) Anmeldenummer: **84890029.6**

(22) Anmeldetag: **17.02.84**

(51) Int. Cl.³: **H 04 M 11/02**
**H 04 M 11/04, G 08 B 21/00**

(30) Priorität: **17.02.83 AT 546/83**

(43) Veröffentlichungstag der Anmeldung:
**29.08.84** Patentblatt **84/35**

(84) Benannte Vertragsstaaten:
**BE CH DE FR GB IT LI NL SE**

(71) Anmelder: **STUZZI Radiotechnische Fabrik
Spezialunternehmen für Magnettontechnik Viktor Stuzzi
Gesellschaft m.b.H.
Stättermayergasse 32
A-1152 Wien(AT)**

(72) Erfinder: **Gatty, Fritz
Alszeile 15/30
A-1170 Wien(AT)**

(72) Erfinder: **Stuzzi, Viktor
Stättermayergasse 32
A-1152 Wien(AT)**

(74) Vertreter: **Schütz, Alfred, Dipl.-Ing. Dr. techn. Dipl.-Ing.
Dr. techn. Alfred Schütz et al,
Dr. phil. Engelbert Mrazek Dipl.-Ing. Walter Holzer
Dipl.-Ing. Otto Pfeifer Fleischmanngasse 9
A-1040 Wien(AT)**

(54) Kombinierte Ruf- und Wechselsprechanlage für Türen.

(57) Bei einer kombinierten Ruf- und Wechselsprechanlage für Türen, bei welcher mittels einer Sprechtaste (18) am Handapparat (14) der Innenstelle über ein Umschaltrelais (19) die Funktionsrichtung eines Verstärkers (12) für den Wechselsprechverkehr umkehrbar ist, wird eine Notsignalgabe seitens einer gefährdeten Person in der Innenstelle und/oder eine Alarmsignalgabe bei Einbruch ermöglicht, indem in der Innenstelle (3) ein Alarmsignalgeber (20) vorgesehen, dessen Ausgang dauernd mit dem Eingang des Verstärkers (12) verbunden ist und dem zumindest ein Auslöseschalter (21) zugeordnet ist, mit dem gleichzeitig der Alarmsignalgeber (20) und der Verstärker (12) einschaltbar sind und der Verstärker auf die Funktionsrichtung Innenstelle-Türstelle umschaltbar ist.

./...

## Kombinierte Ruf- und Wechselsprechanlage für Türen

Die Erfindung betrifft eine kombinierte Ruf- und Wechselsprechanlage für Türen, mit einer eine Ruftaste, ein Mikrophon und einen Lautsprecher enthaltenden Türstelle und einer einen Rufgeber und einen Handapparat mit Auflageschalter und Sprechtaste enthaltenden Innenstelle, in welcher bei Abheben des Handapparates durch den Auflageschalter ein Verstärker für den Wechselsprechverkehr einschaltbar ist, der mittels der ein Umschaltrelais steuernden Sprechtaste von der Funktionsrichtung Türstelle-Innenstelle auf die Funktionsrichtung Innenstelle-Türstelle umschaltbar ist. Anlagen dieser Gattung sind im wesentlichen aus der DE-A-1 192 268 und der DE-A1-25 22 668 bekannt.

Das Bedürfnis, bei Ertönen eines Klingel- oder sonstigen Rufzeichens zunächst eine Sprechverbindung mit der Türstelle herzustellen, besteht aus Sicherheitsgründen hauptsächlich bei alleinstehenden und alten Personen. Dem Sicherheitsbedürfnis solcher Personen wäre sehr gedient, wenn sie auch die Möglichkeit hätten, im Notfall, z.B. im Krankheitsfall oder bei einem Überfall, ein Notsignal an die Türstelle abzugeben, so daß Passanten oder Hausbewohner Hilfe leisten könnten. Die Erfindung befaßt sich deshalb mit der Aufgabe, eine Anlage der einleitend angegebenen Gattung so auszubilden, daß sie ohne weiteren Leitungsaufwand auch eine solche Notsignalgabe von der Innenstelle zur Türstelle ermöglicht.

Bei einer gemäß der Erfindung ausgebildeten kombinierten Ruf- und Wechselsprechanlage der einleitend angegebenen Gattung ist die geschilderte Aufgabe dadurch gelöst, daß in der Innenstelle ein Alarmsignalgeber vorgesehen ist, dessen Ausgang dauernd mit dem Eingang des Verstärkers verbunden ist und dem zumindest ein Auslöseschalter zugeordnet ist, mit dem gleichzeitig der Alarmsignalgeber und der Verstärker einschaltbar sind und der Verstärker auf die Funktionsrichtung Innenstelle-Türstelle umschaltbar ist.

Die meisten bekannten kombinierten Ruf- und Wechselsprechanlagen erfordern eine erhebliche Anzahl von Leitungsadern zwischen der Türstelle und der Innenstelle, was schon bei der Installation in Neubauten im Hinblick auf den Aufwand an Leitungsmaterial erhebliche Kosten verursacht, vor allem aber bei beabsichtigter nachträglicher Installation in Altbauten prohibitiv sein kann, wenn die benötigte Leitung nachträglich verlegt werden müßte oder wenn auch nur in bereits verlegte Leitungsrohre nachträglich zusätzliche Leitungsadern eingezogen werden müßten.

Ausgehend von der Tatsache, daß bei zahlreichen Ein- und Mehrfamilienhäusern und Miethäusern mit einer Vielzahl von Wohnungen zweiadrige Klingelleitungen von der Haus- oder Wohnungstür zu Innenstellen vorhanden sind, ermöglicht die Erfindung eine besonders kostensparende Installation einer mit einem Alarmsignalgeber kombinierten Anlage der geschilderten Art dadurch, daß die Türstelle die Ruftaste, das Mikrophon und den Lautsprecher in Parallelschaltung enthält und im Ruhezustand der Anlage über eine zweiadrige Leitung an einen vom Umschaltrelais gesteuerten Umschaltkontakt im Eingang des Verstärkers angeschlossen ist, mit dem der Ausgang des Alarmsignalgebers dauernd in Verbindung steht.

Bei einer solchen Anlage wird der Umstand, daß sich die Funktionen Rufen, Melden, Wechselsprechen und Alarmsignale zeitlich versetzt abspielen, vorteilhaft zur Ermöglichung aller dieser Signalübertragungen über eine nur zweiadrige Leitung ausgenutzt.

Wie anschließend an Ausführungsbeispielen noch genauer erläutert wird, läßt sich der Alarmsignalgeber so weiterbilden, daß er nicht nur für einen Notruf, sondern auch als Einbruchsalarmgeber verwendbar ist. Bei Häusern mit mehreren Wohnungen und einer gemeinsamen Türstelle muß die normalerweise akustische Alarmsignalgabe mittels Lautsprecher auf später beschriebene Weise noch durch den einzelnen Ruftasten zugeordnete optische Anzeigen ergänzt werden, damit erkennbar ist, in welcher der verschiedenen Wohnungen der Alarm ausgelöst worden ist.

Die Erfindung wird nun unter Bezugnahme auf die Zeichnungen genauer beschrieben, in denen

Figur 1 das Schema einer erfindungsgemäßen Anlage mit einem Alarmsignalgeber zeigt, der sowohl für den Notruf als auch für den Einbruchsalarm verwendbar ist, und

Figur 2 die bei einem Haus mit mehreren Wohnungen bevorzugte Ausbildung der Türstelle erläutert, die es im Alarmfall ermöglicht, zu unterscheiden, in welcher Wohnung ein Alarm ausgelöst worden ist.

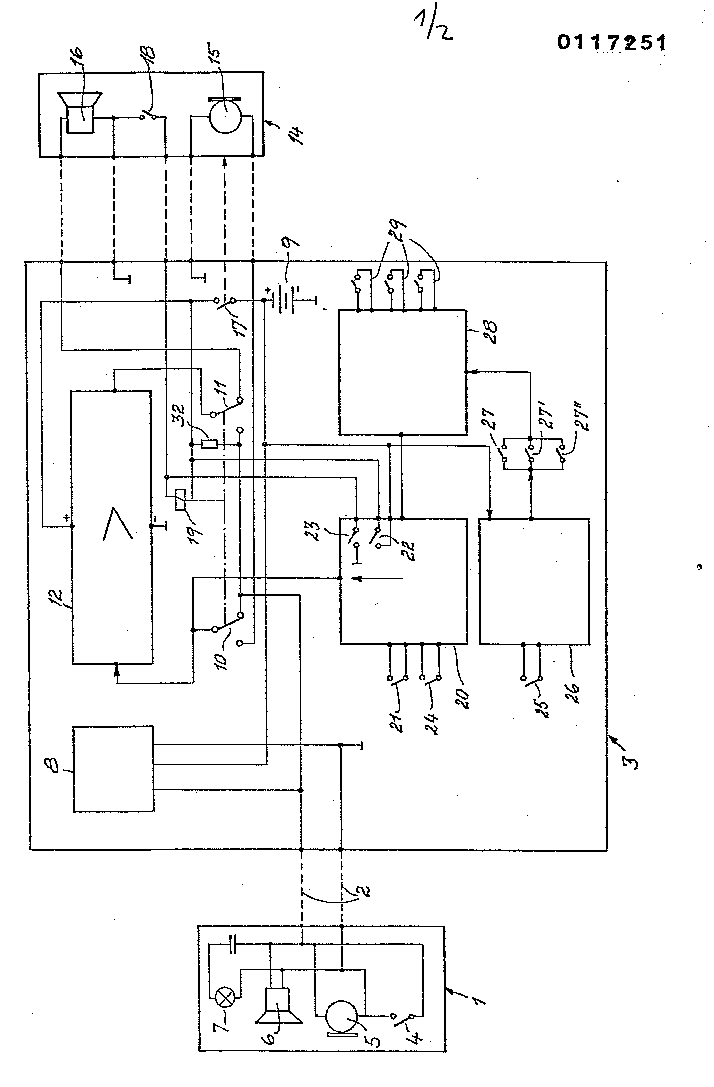

Gemäß Figur 1 ist bei einer erfindungsgemäßen Anlage die Türstelle 1 über eine nur zweiadrige Leitung 2 mit der Innenstelle 3 verbunden. Die Türstelle enthält eine Ruftaste 4, ein Mikrophon 5 und einen Lautsprecher 6, die parallel an die zweiadrige Leitung 2 angeschlossen sind.

In der Innenstelle 3 ist an die Leitung 2 ein Rufgeber 8, z.B. eine Klingel oder vorzugsweise ein handelsüblicher elektronischer Gong in integrierter Schaltung angeschlossen, der ebenso wie alle übrigen energiebedürftigen Teile der Anlage von einer Batterie 9 gespeist wird.

Ferner ist die Leitung 2 mit Umschaltkontakten 10 und 11 verbunden, die im Eingang bzw. im Ausgang eines Verstärkers 12 für den Wechselsprechverkehr zwischen der Türstelle 1 und dem Handapparat 14 der Innenstelle 3 liegen. Bei Abheben des Handapparates 14 schließt ein Auflageschalter 17, wodurch der Verstärker 12 mit der Batterie 9 verbunden und so eingeschaltet wird.

In der gezeigten Ruhestellung steht dann das Mikrophon 5 der Türstelle 1 über den Umschaltkontakt 10, den Verstärker 12 und den Umschaltkontakt 11 mit dem Lautsprecher 16 des Handapparates 14 in Sprechverbindung. Durch Drücken einer Sprechtaste 18 im Handapparat 14 wird ein Umschaltrelais 19 an die Batterie 9 gelegt, wodurch die Umschaltkontakte 10, 11 die Funktionsrichtung des Verstärkers 12 umkehren und alsdann das Mikrophon 15 des Handapparates 14 über den Umschaltkontakt 10, den Verstärker 12 und den Umschaltkontakt 11 mit dem Lautsprecher 6 der Türstelle 1 verbinden.

Wie schon erwähnt, soll nach der Aufgabe der Erfindung insbesondere alten Menschen die Möglichkeit geboten werden, über die Wechselsprechanlage im Bedarfsfall auch ein Notsignal an die Türstelle abzugeben. Zu diesem Zweck ist erfindungsgemäß in der Innenstelle 3 ein Alarmgeber 20 vorgesehen, der z.B. in der Lage ist, im Sekundenrhythmus intermittierend einen Niederfrequenzton von etwa 1500 Hz zu erzeugen. Dieser Alarmsignalgeber 20 kann mittels zumindest eines Auslöseschalters 21 betätigt werden. Es wird sich empfehlen, solche Auslöseschalter an mehreren Stellen einer Wohnung verteilt als Zug- oder Druckschalter anzuordnen, insbesondere auch nahe der Schlafstätte, so daß der Notruf von einer alleinstehenden Person auch bei stark eingeschränkter Bewegungsfähigkeit mit hinreichender Sicherheit ausgelöst werden kann.

Der Ausgang des Alarmsignalgebers 20 ist ständig mit dem Eingang des Verstärkers 12 in der Innenstelle 3 verbunden. Durch die Betätigung des Auslöseschalters 21 werden zwei weitere mechanische oder elektronische Schalter 22 und 23 geschlossen, von denen der erste parallel zum Auflageschalter 17 des Handapparates 14 liegt und an dessen Stelle den Verstärker 12 einschaltet und der letztere parallel zur Sprechtaste 18 des Handapparates 14 liegt und an deren Stelle die Funktionsrichtung des Verstärkers 12 umkehrt, so daß der Signalgeber 20 über den Umschaltkontakt 10, den Verstärker 12 und den Umschaltkontakt 11 mit dem Lautsprecher 6 der Türstelle 1 verbunden ist. Es empfiehlt sich, parallel zum Lautsprecher auch noch ein Lämpchen 7, vorzugsweise eine Leuchtdiode, für die Sichtanzeige anzuordnen, wobei dieses Lämpchen im Rhythmus der
intermittierenden niederfrequenten Alarmsignalgabe aufleuchtet.

Mittels eines weiteren Schalters 24 kann der Alarmsignalgeber 20 nach irrtümlicher Betätigung bzw. nach Eintreffen
eines Helfers wieder abgeschaltet werden. Es ist auch möglich, die Dauer der Alarmsignalgabe durch einen eingebauten elektrischen Zeitgeber von vornherein zu begrenzen,
z.B. auf 10 min.

Wie schon erwähnt, kann die Anlage auch so ausgebildet
oder weitergebildet werden, daß eine Alarmauslösung im
Einbruchsfall erfolgt. Die Auslösung dieses Alarms wird
durch Betätigung eines Schalters 25 vorbereitet, wodurch
nach Ablauf einer Verzögerungszeit von beispielsweise
10 sec im Ausgang einer Verzögerungsstufe 26 Batteriespannung auftritt. Hinter der Verzögerungsstufe 26 liegt
die Parallelschaltung einer beliebigen Anzahl von Tür-
und Fensterkontakten 27, 27', 26" usw., von denen einer
auch die Wohnungstür überwacht. Die erwähnte Verzögerungszeit bezweckt, eine Alarmauslösung durch Betätigung des
zugeordneten Türkontaktes, z.B. 27, beim Verlassen der
Wohnung zu verhindern. Über eine später erläuterte Ausschalteinrichtung 28 wird beim Schließen eines der Überwachungskontakte 27, 27', 27" usw. im Einbruchsfall
Batteriespannung an den Alarmsignalgeber 20 angelegt,
wodurch dieser eingeschaltet wird und auch die elektronischen Schalter 22, 23 schließen, welche den Verstärker
12 einschalten und seine Funktionsrichtung umkehren.

Auch bei der Rückkehr des Wohnungsinhabers wird durch das
Öffnen der Wohnungstür der zugeordnete Überwachungskontakt
27 betätigt, was zu einer falschen Alarmauslösung führen
würde. Um dies zu vermeiden, ist auch zwischen den Überwachungskontakten 27, 27', 27" usw. und dem Alarmsignalgeber 20 eine Verzögerungsstufe 28 eingefügt, welche die

0117251

im Ausgang der Stufe 26 wirksame Spannung erst eine bestimmte Zeitspanne von beispielsweise 10 sec nach dem Schließen des der Wohnungstür zugeordneten Überwachungskontaktes 27 an den Alarmsignalgeber 20 anlegt. Den Verzögerungsstufen 26 und 28 ist ein einfacher Schalter, oder wie dargestellt, eine kodierbare Schalterkombination zugeordnet, um die Einbruchssicherung in den Ruhezustand zurückführen zu können. Beispielsweise können neun Schalter vorgesehen sein, von denen drei in einer vorbestimmten Reihenfolge betätigt werden müssen, um die Einbruchssicherung abzuschalten. Der rückkehrende Wohnungsinhaber hat somit nach Öffnen seiner Wohnungstür hinreichend viel Zeit, um durch Betätigung des Schalters bzw. der Schalterkombination eine falsche Alarmsignalgabe zu verhindern. Die Verwendung einer kodierten Abschaltung bietet den Vorteil, daß ein Einbrecher, auch wenn er die Überwachungsanlage erkennt, nicht in der Lage ist, diese abzuschalten.

Es sei erwähnt, daß es nach Auslösung eines Notrufes mittels des Auslöseschalters 21 am Alarmsignalgeber 20 auch noch möglich ist, nachträglich den Auslöseschalter 25 für die Einbruchssicherung zu betätigen, um etwa bei einem Überfall eine Abschaltung des Alarmsignalgebers 20 durch einen Gewalttäter mit dem Schalter 24 zu verhindern. Eine Abschaltung der Alarmsignalgabe ist dann nämlich nur noch in Kenntnis des für die Schalterkombination 29 geltenden Abschaltkodes möglich.

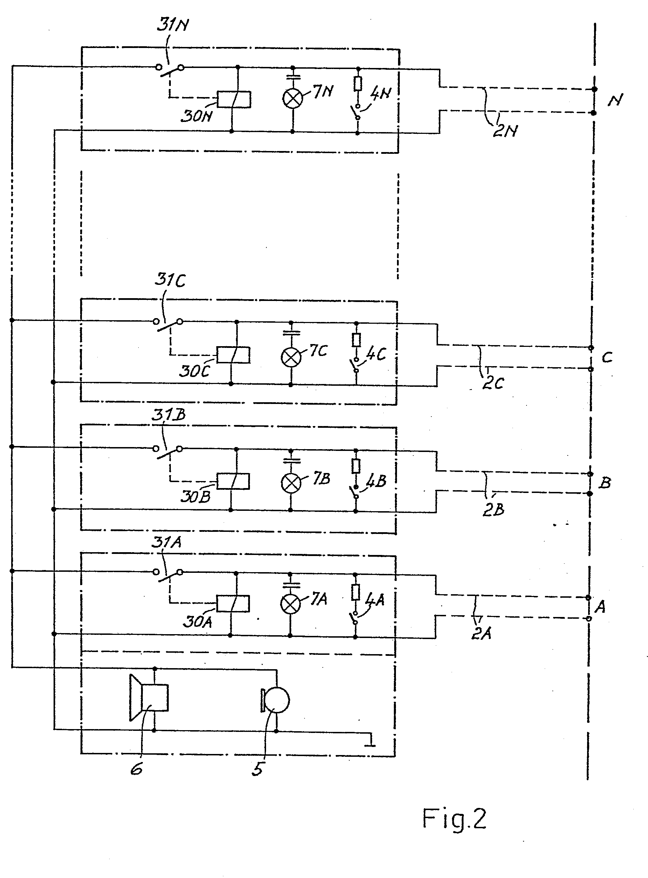

In Häusern mit mehreren Wohnungen A, B, ... N führt gemäß Figur 2 von der allen Wohnungen gemeinsamen Türstelle 1 am Haustor zu jeder Wohnung eine zweiadrige Leitung 2A, 2B, ... 2N und jeder Wohnung sind eine Ruftaste 4A, 4B ... 4N und eine Alarmsignallampe 7A, 7B, ... 7N zugeordnet. Hingegen sind für alle Wohnungen gemeinsam an der Türstelle 1 ein Mikrophon 5 und ein Lautsprecher 6 vorgesehen. Um hiebei eine selektive Verbindung von Mikrophon 5 und Lautsprecher 6 der Türstelle 1 mit jeder Wohnung zu ermöglichen, ist in jeder zweiadrigen Leitung 2 ein Durchschaltrelais 30 angeordnet, das bei Erregung einen Arbeitskontakt 31 im Leitungszug schließt. Jedes Relais 30 wird durch eine an der Leitung 2 liegende Gleichspannung erregt, die von der Batterie 9 der Innenstelle über einen Widerstand 32 abgeleitet wird, wenn entweder der Handapparat 14 abgehoben oder der Alarmgeber 20 angeschaltet ist.

Im Falle der Notsignalgabe in der Wohnung B schaltet das Relais 30B mittels des Kontaktes 31B die Leitung 2B zum Lautsprecher 6 durch, so daß dieser ein akustisches Alarmsignal abgibt, und gleichzeitig leuchtet das Signallämpchen 7B intermittierend auf.

Patentansprüche:

1. Kombinierte Ruf- und Wechselsprechanlage für Türen, mit einer eine Ruftaste (4), ein Mikrophon (5) und einen Lautsprecher (6) enthaltenden Türstelle (1) und einer einen Rufgeber (8) und einen Handapparat (14) mit Auflageschalter (17) und Sprechtaste (18) enthaltenden Innenstelle (3), in welcher bei Abheben des Handapparates durch den Auflageschalter ein Verstärker (12) für den Wechselsprechverkehr einschaltbar ist, der mittels der ein Umschaltrelais (19) steuernden Sprechtaste von der Funktionsrichtung Türstelle-Innenstelle auf die Funktionsrichtung Innenstelle-Türstelle umschaltbar ist, dadurch gekennzeichnet, daß in der Innenstelle (3) ein Alarmsignalgeber (20) vorgesehen ist, dessen Ausgang dauernd mit dem Eingang des Verstärkers (12) verbunden ist und dem zumindest ein Auslöseschalter (21) zugeordnet ist, mit dem gleichzeitig der Alarmsignalgeber (20) und der Verstärker (12) einschaltbar sind und der Verstärker auf die Funktionsrichtung Innenstelle-Türstelle umschaltbar ist.

2. Anlage nach Anspruch 1, dadurch gekennzeichnet, daß die Türstelle die Ruftaste (4), das Mikrophon (5) und den Lautsprecher (6) in Parallelschaltung enthält und im Ruhezustand der Anlage über eine zweiadrige Leitung (2) an einen vom Umschaltrelais (19) gesteuerten Umschaltkontakt (10) im Eingang des Verstärkers (12) angeschlossen ist, mit dem der Ausgang des Alarmsignalgebers (20) dauernd in Verbindung steht.

3. Anlage nach Anspruch 2, dadurch gekennzeichnet, daß an der Türstelle (1) parallel zu der zweiadrigen Leitung (2) ein auf das Alarmsignal ansprechendes Lämpchen (7) angeordnet ist.

4. Anlage nach den Ansprüchen 1 bis 3, dadurch gekennzeichnet, daß der Alarmsignalgeber (20) zur Einbruchssicherung durch Überwachungskontakte (27, 27', 27") an Türen und/oder Fenstern auslösbar ist, wobei eine Verzögerungsstufe (26) vorgesehen ist, durch welche die Spannungsversorgung der Überwachungskontakte um ein vorgegebenes Zeitintervall verzögert wird.

5. Anlage nach den Ansprüchen 1 bis 4, dadurch gekennzeichnet, daß zwischen den Überwachungskontakten (27, 27', 27") und dem Alarmsignalgeber (20) eine weitere Verzögerungsstufe (28) angeordnet ist, mit welcher ein Schalter oder eine kodierte Schalterkombination (29) zur Rückstellung der Einbruchssicherung in den Ruhezustand kombiniert ist.

6. Anlage nach einem der Ansprüche 2 bis 5 für Häuser mit mehreren Wohnungen, wobei jeder Wohnung eine zweiadrige Leitung mit einer Ruftaste und allen Wohnungen ein gemeinsames Mikrophon und ein gemeinsamer Lautsprecher zugeordnet sind, dadurch gekennzeichnet, daß jeder Wohnung (A, B, ... N) überdies an der Türstelle (Figur 2) ein Signallämpchen (7A, 7B, ... 7N) und ein durch Betriebsgleichspannung von der Innenstelle (3) her betätigbares Relais (30A, 30B, ... 30N) mit einem Durchschaltkontakt (31A, 31B, ... 31N) zugeordnet ist und alle zweiadrigen Leitungen (2A, 2B, ... 2N) hinter diesen Durchschaltkontakten parallel an das Mikrophon (5) und an den Lautsprecher (6) angeschlossen sind.

0117251

0117251

Fig.2